# EUROPÄISCHE PATENTSCHRIFT

(11) **EP 2 337 616 B1**
(45) Veröffentlichungstag und Bekanntmachung des Hinweises auf die Patenterteilung: **08.06.2016**
(21) Anmeldenummer: 09745526.5
(22) Anmeldetag: 08.05.2009
(51) Int. Cl.: B01D 21/00, B01D 21/24, D21F 1/66, C02F 3/00

(54) **DREIPHASEN-KASKADENTRENNVORRICHTUNG**
THREE-PHASE CASCADE SEPARATOR
DISPOSITIF DE SÉPARATION TRIPHASIQUE EN CASCADE

(30) Priorität: 12.08.2008 DE 102008037355
(43) Veröffentlichungstag der Anmeldung: 29.06.2011
(73) Patentinhaber: Voith Patent GmbH, 89522 Heidenheim (DE)
(72) Erfinder: MENKE, Lukas, 81545 München (DE); TROUBOUNIS, Georgios, 80331 München (DE); MULDER, Ronald, NL-1811 BN Alkmaar (NL)
(86) Internationale Anmeldenummer: PCT/EP2009/003283
(87) Internationale Veröffentlichungsnummer: WO 2009/138192

(56) Entgegenhaltungen:
- DE-A1- 2 033 021
- DE-B- 1 584 862
- FR-A- 356 522
- FR-A- 2 483 799
- US-A- 2 428 756

## Beschreibung

Die vorliegende Erfindung betrifft eine Dreiphasen-Trennvorrichtung zur Abtrennung von Gas und Feststoff aus einem Flüssigkeit, Gas und Feststoff enthaltenden Dreiphasen-Gemisch, einen eine solche Dreiphasen-Trennvorrichtung umfassenden Reaktor sowie ein Verfahren zur Abtrennung von Gas und Feststoff aus einem Flüssigkeit, Gas und Feststoff enthaltenden Dreiphasen-Gemisch.

Dreiphasen-Trennvorrichtungen zur Abtrennung von Gas und Feststoff aus einem Flüssigkeit, Gas und Feststoff enthaltenden Dreiphasen-Gemisch werden auf einer Vielzahl von technischen Gebieten eingesetzt, wie beispielsweise bei der biologischen Reinigung von Abwasser oder Prozesswasser. Während der biologischen Abwasser- bzw. Prozesswasserreinigung wird das zu reinigende Abwasser bzw. Prozesswasser mit aeroben oder anaeroben Mikroorganismen kontaktiert, welche die in dem Abwasser enthaltenen organischen Verunreinigungen im Falle von aeroben Mikroorganismen überwiegend zu Kohlendioxid und Wasser und im Falle von anaeroben Mikroorganismen vorwiegend zu Kohlendioxid und Methan abbauen. Dabei wird das zu reinigende Abwasser bzw. Prozesswasser den entsprechenden Reaktoren, in denen die biologischen Reinigung stattfindet, in der Regel über einen Zulauf im unteren Reaktorbereich kontinuierlich zugeführt und dieses durch ein oberhalb des Zulaufs befindliches, Schlammbett geführt, welches je nach Abwassereigenschaft und Verfahrensweise Mikroorganismenpellets oder Mikroorganismenflocken enthält. Hierbei muss den Reaktoren bei der aeroben Abwasser- bzw. Prozesswasserreinigung für das Wachstum der Mikroorganismen benötigter Sauerstoff, üblicherweise in der Form von Luft, zugeführt werden, wobei sich die Luft während des Betrieb des Reaktors in Form von Gasblasen zumindest teilweise an die Mikroorganismenagglomerate anlagert. Im Unterschied dazu wird bei der anaeroben Abwasser- bzw. Prozesswasserreinigung unter Sauerstoffausschluss gearbeitet; allerdings bilden die anaeroben Mikroorganismen bei dem Abbau der in dem zu reinigenden Abwasser- bzw. Prozesswasser enthaltenen organischen Verbindungen insbesondere Methan und Kohlendioxid enthaltendes Gas, welches auch als Biogas bezeichnet wird, das sich teilweise in Form kleiner Bläschen an den Mikroorganismenpellets anlagert und teilweise in Form von freien Gasbläschen in dem Reaktor nach oben steigt. Aufgrund der angelagerten Gasbläschen sinkt das spezifische Gewicht der Mikroorganismenpellets bzw. -flocken, weshalb zumindest ein Teil der Pellets bzw. Flocken in dem Reaktor nach oben steigt. Sowohl bei der anaeroben als auch bei der aeroben Abwasser- bzw. Prozesswasserreinigung bildet sich somit in dem Reaktor ein Wasser, Mikroorganismenpellets und Gas(blasen) enthaltendes Dreiphasen-Gemisch, aus dem in dem oberen Reaktorbereich Gas und Feststoff abgetrennt werden müssen, um gereinigtes Wasser beispielsweise durch einen oder mehrere Überläufe aus dem Reaktor abführen zu können.

Zur Abtrennung von Gas und Feststoff aus einem Flüssigkeit, Gas und Feststoff enthaltenden Dreiphasen-Gemisch ist in der US 5,855,785 eine Dreiphasen-Trennvorrichtung vorgeschlagen worden, welche eine Gashaube umfasst, in deren unteren Bereich ein oder mehrere schräg angeordnete Lamellen vorgesehen sind, um eine um diese Lamelle(n) herumführende Flüssigkeitsströmung zu verursachen, welche an dem oberen Teil der Lamelle(n) eine gute Gas-/Flüssigkeits-Trennung gewährleisten soll. Beim Betrieb dieser Dreiphasen-Trennvorrichtung wird das Flüssigkeit, Gas und Feststoff enthaltende Dreiphasen-Gemisch an der wenigstens einen Lamellen, von der Vertikalen aus gesehen, von oben nach unten geführt, wobei die Abtrennung von Gas aus dem Dreiphasen-Gemisch an dem oberen Ende der Lamelle(n) stattfindet und die Abtrennung von Feststoff aus dem Gemisch durch Sedimentation des Feststoffs an dem unteren Ende der Lamelle(n) zu dem Reaktorboden hin erfolgt, während das gereinigte Wasser in dem Reaktor nach oben steigt.

Ein Nachteil dieser Dreiphasen-Trennvorrichtung liegt jedoch darin, dass die Feststoffabtrennung durch Absinken der Mikroorganismenpellets von dem unteren Lamellenende in dem Reaktor nach unten erfolgt. Daher setzt eine wirksame Feststoffabtrennung eine hinreichend geringe Strömungsgeschwindigkeit in dem Reaktor voraus, weil andernfalls die Pellets mit der Flüssigkeitsströmung nach oben mitgerissen werden. Mithin ist das Verfahren unter Verwendung der vorgenannten Dreiphasen-Trennvorrichtung auf niedrige Flüssigkeitsströmungsgeschwindigkeiten beschränkt, weswegen mit diesem, bezogen auf das Reaktorvolumen, nur eine geringe Menge an Wasser pro Zeit und pro Reaktorvolumen gereinigt werden kann und die Flexibilität hinsichtlich der Verfahrensführung stark eingeschränkt ist. Ein weiterer Nachteil der vorgenannten Dreiphasen-Trennvorrichtung liegt darin, dass diese das in dem Dreiphasen-Gemisch enthaltene Gas und den darin enthaltenen Feststoff nur unzureichend abtrennt, weswegen das aus dem Reaktor abgeführte Wasser nur eine vergleichsweise geringe Reinheit aufweist.

Aus der WO 96/32177 ist eine Dreiphasen-Trennvorrichtung bekannt, welche eine Vielzahl von jeweils parallel zueinander, bezogen auf die Vertikale schräg nach oben angeordneten Kappen mit einem v-förmigen Querschnitt umfasst, wobei in dem oberen Bereich der Kappen eine horizontal angeordnete Gashaube vorgesehen ist, welche sich horizontal durch die Kanten der Kappen erstreckt. Beim Betrieb dieser Vorrichtung wird das Dreiphasen-Gemisch durch einen Einlassbereich in die Dreiphasen-Trennvorrichtung eingeführt, um dann von unten nach oben durch die zwischen den einzelnen Kappen vorgesehenen Strömungskanäle geführt zu werden. Während die in dem Gemisch enthaltenen schweren Feststoffe bei dieser Führung von unten nach oben sedimentieren, werden in dem Gemisch enthaltene leichte Feststoffe und Gas in der Gashaube abgefangen und von dort aus der Trennvorrichtung abgeführt.

Ein Nachteil der vorgenannten Trennvorrichtung liegt darin, dass die Abtrennung von in dem Dreiphasen-Gemisch enthaltenem Feststoff und Gas hauptsächlich in der Gashaube und folglich gleichzeitig erfolgt. Je größer jedoch die Strömungsgeschwindigkeit durch die zwischen den einzelnen Kappen vorgesehenen Strömungskanäle ist, desto unvollständiger ist diese Abtrennung von Gas und Feststoff aus dem Gemisch, weil mit zunehmender Strömungsgeschwindigkeit ein Teil des Feststoffs mit den daran angelagerten Gasbläschen an der Gashaube vorbei geführt wird und somit in der Flüssigkeit verbleibt. Mithin ist das Verfahren unter Verwendung der vorgenannten Dreiphasen-Trennvorrichtung auf geringe Flüssigkeitsströmungsgeschwindigkeiten beschränkt, weswegen mit diesem, bezogen auf das Reaktorvolumen, nur eine geringe Menge an Wasser pro Zeit und pro Reaktorvolumen gereinigt werden kann und die Flexibilität hinsichtlich der Verfahrensführung stark eingeschränkt ist. Ferner wird mit der vorgenannten Trennvorrichtung nur eine unzureichende Abtrennung von Gas und Feststoff aus dem Dreiphasen-Gemisch erreicht.

Aus der DE 2 033 021 ist eine Vorrichtung zum Entfernen von verschiedenen Komponenten aus einer Flüssigkeit mit einer Zuführungskammer und einer Auslasskammer bekannt, zwischen denen ein oder mehrere Separatoren mit geneigten Durchlässen zwischen gewellten Platten, Trögen oder dergleichen vorgesehen sind, wobei zusätzliche Einrichtungen in Strömungsrichtung vor und/ oder hinter einem Separator zum Ausführen einer zusätzlichen Abscheidung dieser Komponenten vorgesehen sind.

Aufgabe der vorliegenden Erfindung ist daher die Bereitstellung einer Dreiphasen-Trennvorrichtung zur Abtrennung von Gas und Feststoff aus einem Flüssigkeit, Gas und Feststoff enthaltenden Dreiphasen-Gemisch, welche mit einer hohen Flüssigkeitsströmungsgeschwindigkeit betrieben werden kann, um so eine große Menge an Dreiphasen-Gemisch pro Zeit und pro Reaktorvolumen reinigen zu können, und, welche eine vollständige oder zumindest nahezu vollständige Abtrennung von Gas und Feststoff aus einem Flüssigkeit, Gas und Feststoff enthaltenden Dreiphasen-Gemisch erreicht, sowie die Bereitstellung eines entsprechenden Verfahrens zur Abtrennung von Gas und Feststoff aus einem Flüssigkeit, Gas und Feststoff enthaltenden Dreiphasen-Gemisch.

Erfindungsgemäß wird diese Aufgabe gelöst durch die Bereitstellung einer Dreiphasen-Trennvorrichtung zur Abtrennung von Gas und Feststoff aus einem Flüssigkeit, Gas und Feststoff enthaltenden Dreiphasen-Gemisch umfassend:
- einen Einlassbereich für das Dreiphasen-Gemisch,
- einen Auslass für eine an Feststoff reiche Fraktion,
- einen Auslass für Flüssigkeit,
- einen ersten Separator zur Abtrennung von Gas aus dem Dreiphasen-Gemisch unter Bildung eines Zweiphasen-Gemisches, welches Flüssigkeit und Feststoff enthält, wobei der erste Separator den Einlassbereich für das Dreiphasen-Gemisch ausbildet oder mit dem Einlassbereich für das Dreiphasen-Gemisch verbunden ist, wobei der erste Separator vier Lamellenblöcke mit jeweils wenigstens drei zueinander parallelen Lamellen aufweist, zwischen denen jeweils ein Strömungskanal ausgebildet ist, und, wobei der erste Separator so ausgestaltet ist, dass das durch den Einlassbereich eintretende Gemisch in den Strömungskanälen, bezogen auf die Vertikale, von oben nach unten geführt wird, und
- einen zweiten Separator zur Abtrennung von Feststoff aus dem in dem ersten Separator gebildeten Zweiphasen-Gemisch, wobei der zweite Separator einen Lamellenblock mit wenigstens drei zueinander parallelen Lamellen aufweist, zwischen denen jeweils ein Strömungskanal ausgebildet ist, und wobei der zweite Separator so ausgestaltet und bezogen auf den ersten Separator so angeordnet ist, dass das aus dem ersten Separator austretende Zweiphasen-Gemisch, bezogen auf die Vertikale, von unten in die Strömungskanäle des zweiten Separators eintritt und in diesen nach oben geführt wird, und, wobei
   i) jeder Lamellenblock an jeder seiner beiden Seitenflächen an eine Seitenfläche eines anderen Lamellenblocks angrenzt, so dass die einzelnen Lamellenblöcke, vom Querschnitt der Dreiphasen-Trennvorrichtung aus gesehen, in der Form einer Raute angeordnet sind, und der zweite Separator einen Lamellenblock aufweist, welcher, vom Querschnitt der Dreiphasen-Trennvorrichtung aus gesehen, in der Mitte der von den vier Lamellenblöcken des ersten Separators gebildeten Raute angeordnet ist oder
   ii) jeweils zwei Lamellenblöcke mit einer ihrer beiden Seitenflächen unter einem, bezogen auf die Längsrichtung des Lamellenblocks, Neigungswinkel von 10° bis 80° aneinander angrenzen und die beiden aus den beiden so aneinander angrenzenden Lamellenblöcken gebildeten Lamellenblockpakete über jeweils eine die Seitenflächen der Lamellenblockpakete verbindende Wand miteinander verbunden sind, so dass die vier Lamellenblöcke und die beiden Wände, vom Querschnitt der Dreiphasen-Trennvorrichtung aus gesehen, in der Form eines Hexagons angeordnet sind, und der zweite Separator einen Lamellenblock aufweist, welcher, vom Querschnitt der Dreiphasen-Trennvorrichtung aus gesehen, in der Mitte des von den vier Lamellenblöcken und den beiden Wänden des ersten Separators gebildeten Hexagons angeordnet ist,
wobei die Dreiphasen-Trennvorrichtung so ausgestaltet ist, dass das Dreiphasen-Gemisch nur über den Einlassbereich in den ersten Separator der Dreiphasen-Trennvorrichtung eintreten kann.

Indem die Dreiphasen-Trennvorrichtung zwei verschiedene Separatoren umfasst, nämlich einen ersten, vier Lamellenblöcke umfassenden Separator, dessen wenigstens drei Lamellen so angeordnet sind, dass die dazwischen ausgebildeten Strömungskanäle von dem Dreiphasen-Gemisch, bezogen auf die Vertikale, von oben nach unten durchströmt werden, und einen zweiten, einen Lamellenblock umfassenden Separator, dessen wenigstens drei Lamellen so angeordnet sind, dass die dazwischen ausgebildeten Strömungskanäle von dem Dreiphasen-Gemisch, bezogen auf die Vertikale, von unten nach oben durchströmt werden, wird erreicht, dass in dem ersten Separator eine hervorragende Abtrennung von Gas aus dem Dreiphasen-Gemisch erfolgt und in dem zweiten Separator eine hervorragende Abtrennung von Feststoff aus dem aus dem ersten Separator abgeführten Zweiphasen-Gemisch erfolgt, so dass in der Dreiphasen-Trennvorrichtung eine zumindest nahezu vollständige Abtrennung von Gas und Feststoff aus einem Flüssigkeit, Gas und Feststoff enthaltenden Dreiphasen-Gemisch erreicht wird. Zudem wird durch die derartige Ausgestaltung der Dreiphasen-Trennvorrichtung, dass das Dreiphasen-Gemisch nur über den Einlassbereich in den ersten Separator der Dreiphasen-Trennvorrichtung eintreten kann, erreicht, dass eine Kontamination des aus dem ersten Separator austretenden Zweiphasen-Gemisches mit Gas verhindert wird, da das Dreiphasen-Gemisch nicht in den zweiten Separator eintreten kann, was zu der vollständigen Abtrennung von Gas und Feststoff in der Dreiphasen-Trennvorrichtung beiträgt. Ferner ermöglicht dies, dass die erfindungsgemäße Dreiphasen-Trennvorrichtung mit einer hohen Flüssigkeitsströmungsgeschwindigkeit betrieben werden kann, weswegen eine große Menge an Dreiphasen-Gemisch pro Zeit und pro Reaktorvolumen gereinigt werden kann. Des Weiteren wird es durch das Vorsehen zweier verschiedener Separatoren, von denen einer, nämlich der erste, zunächst Gas aus dem Dreiphasen-Gemisch abtrennt, während in dem zweiten Separator der Feststoff aus dem aus dem ersten Separator abgeführten Zweiphasen-Gemisch abgetrennt wird, ermöglicht, dass die Durchsatzrate in dem ersten Separator unabhängig und insbesondere auch höher als in dem zweiten Separator eingestellt werden kann, was eine hervorragende Flexibilität hinsichtlich der Verfahrensführung und eine Optimierung der Reinigungseffizienz erlaubt. Insgesamt ermöglicht die erfindungsgemäße Dreiphasen-Trennvorrichtung daher eine zumindest nahezu vollständige Abtrennung von Gas und Feststoff aus einem Flüssigkeit, Gas und Feststoff enthaltenden Dreiphasen-Gemisch, wobei mit dieser eine große Menge an Dreiphasen-Gemisch pro Zeit und pro Reaktorvolumen reinigen kann.

Unter Lamelle wird im Sinne der vorliegenden Erfindung im Einklang mit der üblichen Definition dieses Begriffs eine dünne, lange Platte verstanden, wohingegen der Begriff Lamellenblock mehrere, mit ihren Flächen parallel oder annähernd parallel zueinander angeordnete Lamellen bezeichnet, wobei nur ihre Kanten nach außen weisen.

Um eine hohe Trennkapazität der Dreiphasen-Trennvorrichtung zu erreichen, wird es in Weiterbildung des Erfindungsgedankens vorgeschlagen, dass der erste Separator vier Lamellenblöcke umfasst, welche aus 3 bis 15 und besonders bevorzugt aus 5 bis 10 zueinander parallelen Lamellen aufgebaut sind, zwischen denen jeweils ein Strömungskanal ausgebildet ist. Aus dem gleichen Grund ist es bevorzugt, dass der zweite Separator einen Lamellenblock umfasst, welcher aus 3 bis 60, besonders bevorzugt aus 5 bis 25 und ganz besonders bevorzugt aus 10 bis 20 zueinander parallelen Lamellen aufgebaut ist, zwischen denen jeweils ein Strömungskanal ausgebildet ist.

Gemäß einer weiteren bevorzugten Ausführungsform der vorliegenden Erfindung, weisen die einzelnen Lamellen des ersten Separators und/oder des zweiten Separators, bezogen auf die Horizontale, eine Neigung (α) zwischen 20° und 100° auf. Dadurch wird eine hohe Trennleistung der Separatoren erreicht, d.h. eine hohe Abtrennleistung für Gas in dem ersten Separator und eine hohe Abtrennleistung für Feststoff in dem zweiten Separator.

Gute Trennleistungsergebnisse werden für den zweiten Separator insbesondere erhalten, wenn der Neigungswinkel (α) der einzelnen zueinander parallelen Lamellen des Lamellenblocks, bezogen auf die Horizontale, zwischen 20° und 80° und bevorzugt zwischen 40° und 60° beträgt.

Grundsätzlich können auch die einzelnen Lamellen der Lamellenblöcke des ersten Separators, bezogen auf die Horizontale, die vorgenannten Neigungswinkel (α) aufweisen, also 20° bis 80° und bevorzugt 40° bis 60°. Allerdings hat es sich im Rahmen der vorliegenden Erfindung überraschenderweise herausgestellt, dass in dem ersten Separator eine besonders hervorragende Gasabtrennung aus dem Dreiphasen-Gemisch erreicht wird, wenn der Neigungswinkel (α) der einzelnen zueinander parallelen Lamellen der Lamellenblöcke des ersten Separators, bezogen auf die Horizontale, zwischen 80° und 100° und bevorzugt etwa 90° und besonders bevorzugt genau 90° beträgt.

Vorzugsweise ist der Einlassbereich für das Dreiphasen-Gemisch, welcher besonders bevorzugt von dem wenigstens einen ersten Separator ausgebildet ist, in der Dreiphasen-Trennvorrichtung, bezogen auf deren Querschnitt, außen bzw. bei einer Dreiphasen-Trennvorrichtung mit rundem Querschnitt radial außen angeordnet. Dadurch wird erreicht, dass die spezifische Grenzfläche für das Dreiphasen-Gemisch in dem Einlassbereich groß ist, was die hervorragende Abtrennung von Gas und Feststoff aus dem Dreiphasen-Gemisch weiter begünstigt.

Im Hinblick auf eine hohe Trennkapazität und insbesondere im Hinblick auf hohe spezifische Durchsatzraten der Dreiphasen-Trennvorrichtung ist es gemäß einer weiteren bevorzugten Ausführungsform der vorliegenden Erfindung bevorzugt, dass der erste Separator vier Lamellenblöcke umfasst, welche jeweils wenigstens drei zueinander parallele Lamellen mit jeweils dazwischen ausgebildeten Strömungskanälen aufweisen, wobei die Lamellen der einzelnen Lamellenblöcke, bezogen auf die Horizontale, vorzugsweise eine Neigung (α) zwischen 20° und 100°, besonders bevorzugt eine Neigung (α) zwischen 80° und 100° und ganz besonders bevorzugt eine Neigung (α) von 90° aufweisen. Dies ermöglicht es, die einzelnen Lamellenblöcke des ersten Separators in dem Außenbereich der Dreiphasen-Trennvorrichtung, bezogen auf ihren Querschnitt, gleichmäßig zu verteilen, so dass das Dreiphasen-Gemisch nicht nur über eine Seite der Dreiphasen-Trennvorrichtung, sondern über mehrere Seiten der Dreiphasen-Trennvorrichtung eintreten kann.

Wie bereits dargelegt, ist es bevorzugt, dass der Einlassbereich für das Dreiphasen-Gemisch in der Dreiphasen-Trennvorrichtung, bezogen auf ihren Querschnitt, außen angeordnet ist, und, dass der Einlassbereich von dem wenigstens einen ersten Separator ausgebildet wird. Dabei ist es bevorzugt, dass die Stirnfläche(n) des wenigstens einen Lamellenblocks des ersten Separators die Dreiphasen-Trennvorrichtung nach außen begrenzt/begrenzen.

Gemäß einer weiteren bevorzugten Ausführungsform der vorliegenden Erfindung umfasst der erste Separator wenigstens zwei, vorzugsweise vier, Lamellenblockagglomerate, von denen jedes Lamellenblockagglomerat wenigstens vier Lamellenblöcke umfasst, wobei jeder Lamellenblock mit wenigstens einer seiner Seitenflächen an eine Seitenfläche eines anderen Lamellenblocks angrenzt.

Bei der vorgenannten Ausführungsform ist es vorgesehen, dass der erste Separator wenigstens zwei, vorzugsweise vier, Lamellenblockagglomerate umfasst, von denen jedes Lamellenblockagglomerat vier Lamellenblöcke umfasst, wobei jeweils zwei Lamellenblöcke eines jeden Lamellenblockagglomerats mit einer ihrer beiden Seitenflächen unter einem, bezogen auf die Längsrichtung des Lamellenblocks, Neigungswinkel von 10° bis 80° aneinander angrenzen und die beiden aus den beiden so aneinander angrenzenden Lamellenblöcken gebildeten Lamellenblockpakete über jeweils eine die Seitenflächen der Lamellenblockpakete verbindende Wand miteinander verbunden sind, so dass die vier Lamellenblöcke und die beiden Wände eines jeden Lamellenblockagglomerats, vom Querschnitt der Dreiphasen-Trennvorrichtung aus gesehen, in der Form eines Hexagons angeordnet sind. In der Mitte jedes Hexagons ist der zweite Separator, welcher besonders bevorzugt einen Lamellenblock umfasst, vorgesehen.

Vorzugsweise wird der Einlassbereich für das Dreiphasen-Gemisch durch die oberen Enden der einzelnen Lamellen des wenigstens einen Lamellenblocks des ersten Separators ausgebildet, wobei es insbesondere in diesem Fall besonders bevorzugt ist, dass der wenigstens eine Lamellenblock des ersten Separators, vom Querschnitt der Dreiphasen-Trennvorrichtung aus gesehen, außen angeordnet ist.

Des Weiteren ist es bevorzugt, dass die Lamellen des Lamellenblocks des zweiten Separators, bezogen auf ihre Längsseiten, in einem Winkel von 10° bis 90°, bevorzugt von 45° bis 90° und besonders bevorzugt von 55° bis 90° zu den Lamellen des wenigstens einen ersten Separators angeordnet sind.

Während es, wie dargelegt, bevorzugt ist, dass der erste Separator vier Lamellenblöcke umfasst, umfasst der zweite Separator nur einen Lamellenblock.

Vorzugsweise sind die Lamellen des Lamellenblocks des zweiten Separators, bezogen auf ihre Längsseiten, in einem Winkel von 55° bis 90° zu den Lamellen des wenigstens einen ersten Separators angeordnet.

Um den wenigstens einen ersten Separator von dem wenigstens einen zweiten Separator zu trennen, wird es in Weiterbildung des Erfindungsgedankens vorgeschlagen, zwischen dem wenigstens einen Lamellenblock des zweiten Separators und dem wenigstens einen daran angrenzenden Lamellenblock des ersten Separators eine Zwischenwand vorzusehen, welche, von der Vertikalen aus gesehen, über das obere Ende des ersten Separators hinausgeht. Dadurch wird insbesondere bei der Ausführungsform, bei welcher der Einlassbereich für das Dreiphasen-Gemisch durch den ersten Separator ausgebildet wird, zuverlässig vermieden, dass aus dem Einlassbereich Dreiphasen-Gemisch in den zweiten Separator eintritt.

Bei der vorgenannten Ausführungsform ist es insbesondere vorteilhaft, dass die Zwischenwand die, von der Längsachse der Dreiphasen-Trennvorrichtung aus gesehen, innersten Lamellen der an den zweiten Separator angrenzenden Lamellenblöcke des ersten Separators ist, wobei die innersten Lamellen höher sind als die anderen Lamellen desselben Lamellenblocks sind. In diesem Fall handelt es sich bei der Zwischenwand mithin um eine verlängerte Lamelle.

Vorzugsweise ist der Auslass für Flüssigkeit oberhalb des oberen Endes des wenigstens einen Lamellenblocks des zweiten Separators angeordnet.

Es ist bevorzugt, dass jeweils am unteren Ende der, von der Längsachse der Dreiphasen-Trennvorrichtung aus gesehen, äußersten Lamellen jeden der vier Lamellenblöcke des ersten Separators eine Außenwandung vorgesehen ist. Dabei hat es sich als besonders bevorzugt erwiesen, wenigstens zwei der Außenwandungen, von der Längsachse der Dreiphasen-Trennvorrichtung aus gesehen, nach innen abzuwinkeln, so dass die Außenwandungen, von der Vertikalen aus gesehen, nach unten unter Ausbildung einer Kehle zusammenlaufen. Dadurch wird es ermöglicht, dass die sich zwischen dem wenigstens einen ersten Separator und dem wenigstens einen zweiten Separator ausbildende, an Feststoff reiche Fraktion bei dem Betrieb der Vorrichtung in der Kehle ansammelt und über den entsprechenden Auslass vollständig die Trennvorrichtung verlassen kann. Dabei hat es sich als besonders vorteilhaft erwiesen, wenn die die Kehle ausbildenden Außenwandungen zueinander in einem Winkel von 30° bis 120°, vorzugsweise von 40° bis 100°, besonders bevorzugt von 60° bis 80° und ganz besonders bevorzugt von 70° verlaufen.

Bei der vorgenannten Ausführungsform ist der Auslass für die an Feststoff reiche Fraktion vorzugsweise an der Kehle vorgesehen, wobei der Auslass besonders bevorzugt in der Form eines zu der Kehle parallel verlaufenden Schlitzes ausgebildet ist.

Um ein Eindringen von Dreiphasen-Gemisch in die Dreiphasen-Trennvorrichtung an Stellen außerhalb des Eingangsbereichs und somit insbesondere auch ein Eindringen von Dreiphasen-Gemisch in den zweiten Separator zuverlässig zu verhindern, wird es in Weiterbildung des Erfindungsgedankens vorgeschlagen, unterhalb des Auslasses für die an Feststoff reiche Fraktion eine Blende vorzusehen und diese derart auszugestalten, dass durch den Auslass kein(e) von unterhalb der Dreiphasen-Trennvorrichtung vertikal nach oben strömende(s) Flüssigkeit, Gas oder Feststoff Gemisch in die Dreiphasen-Trennvorrichtung eintreten kann.

Ein weiterer Gegenstand der vorliegenden Erfindung ist ein Reaktor, welcher in seinem oberen Bereich die zuvor beschriebene, erfindungsgemäße Dreiphasen-Trennvorrichtung aufweist.

Bei dem Reaktor kann es sich insbesondere um einen anaeroben oder aeroben Reaktor zur Reinigung von Abwasser oder Prozesswasser handeln, welcher wenigstens eine Zufuhrleitung zur Zuführung von zu reinigendem Abwasser oder Prozesswasser in den Reaktor, wenigstens eine Abfuhrleitung zur Abführung von gereinigtem Abwasser oder Prozesswasser aus dem Reaktor und wenigstens eine Abfuhrleitung zur Abführung von Gas aus dem Reaktor aufweist. Besonders bevorzugt handelt es sich bei dem Reaktor um einen anaeroben oder aeroben Reaktor zur kontinuierlichen Reinigung von Abwasser oder Prozesswasser in der Papierindustrie.

Ein weiterer Gegenstand der vorliegenden Erfindung ist ein Verfahren zur Abtrennung von Gas und Feststoff aus einem Flüssigkeit, Gas und Feststoff enthaltenden Dreiphasen-Gemisch. Erfindungsgemäß umfasst dieses Verfahren die nachfolgenden Schritte:
a) Einführen des Dreiphasen-Gemisches über einen Einlassbereich in den ersten Separator einer Dreiphasen-Trennvorrichtung eines zuvor beschriebenen Reaktors, wobei der erste Separator den Einlassbereich für das Dreiphasen-Gemisch ausbildet oder mit dem Einlassbereich für das Dreiphasen-Gemisch verbunden ist,
b) Führen des Dreiphasen-Gemisches, bezogen auf die Vertikale, von oben nach unten durch die Strömungskanäle des ersten Separators, um Gas aus dem Dreiphasen-Gemisch unter Bildung eines Zweiphasen-Gemisches abzutrennen,
c) Abziehen des Zweiphasen-Gemisches aus dem ersten Separator,
d) Einführen zumindest eines Teils des Zweiphasen-Gemisches in den zweiten Separator,
e) Führen des Zweiphasen-Gemisches, bezogen auf die Vertikale, von unten nach oben durch die wenigstens zwei Strömungskanäle des zweiten Separators, um Feststoff aus dem Zweiphasen-Gemisch unter Bildung einer gereinigten Flüssigkeit und einer an Feststoff reichen Fraktion abzutrennen,
f) Abführen der gereinigten Flüssigkeit aus dem zweiten Separator und
g) Abführen der an Feststoff reichen Fraktion durch einen Auslass aus der Dreiphasen-Trennvorrichtung,
wobei in den zweiten Separator nur aus dem ersten Separator abgeführtes Zweiphasen-Gemisch, aber kein Dreiphasen-Gemisch eingeführt wird.

Vorzugsweise wird das Verfahren so betrieben und wird die Fläche (A) des Auslasses für die an Feststoff reiche Fraktion aus der Dreiphasen-Trennvorrichtung so dimensioniert, dass die Eintrittsgeschwindigkeit des Dreiphasen-Gemisches in den Einlassbereich des ersten Separators geringer ist als die Aufstiegsgeschwindigkeit der Gasblasen in dem Dreiphasen-Gemisch.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine perspektivische Ansicht einer DreiphasenTrennvorrichtung gemäß eines ersten Ausführungsbeispiels der vorliegenden Erfindung,
- Fig. 2: einen perspektivischen Längsschnitt der in der Fig. 1 dargestellten Dreiphasen-Trennvorrichtung,
- Fig. 3: eine Draufsicht einer Dreiphasen-Trennvorrichtung gemäß eines zweiten Ausführungsbeispiels der vorliegenden Erfindung,
- Fig. 4: einen perspektivischen Längsschnitt der in der Fig. 3 dargestellten Dreiphasen-Trennvorrichtung,
- Fig. 5: eine Draufsicht einer Dreiphasen-Trennvorrichtung gemäß eines dritten Ausführungsbeispiels der vorliegenden Erfindung, welche vier Lamellenblockagglomerate aufweist, und
- Fig. 6: einen schematischen Längsschnitt eines Reaktors zur anaeroben Reinigung von Abwasser, welcher eine in den Figuren 1 und 2 dargestellte Dreiphasen-Trennvorrichtung gemäß der vorliegenden Erfindung aufweist.

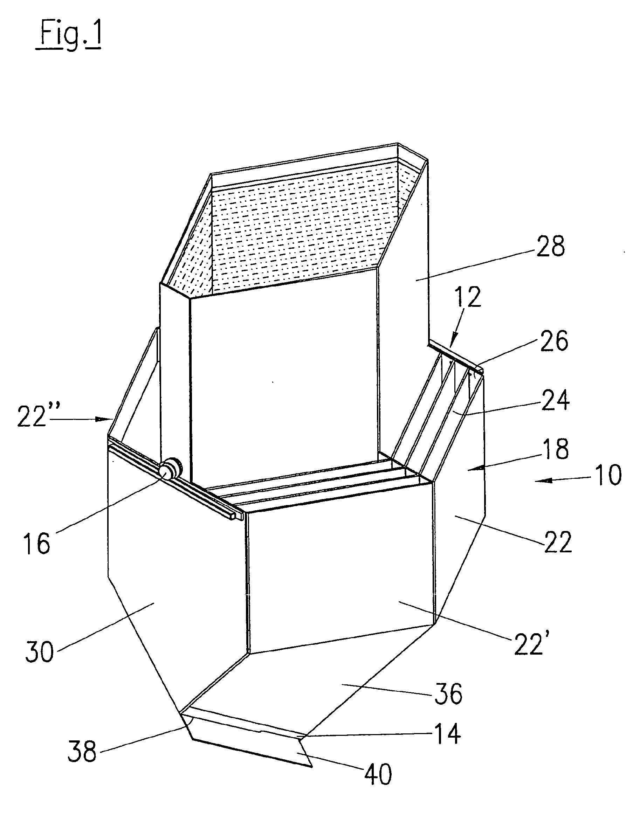

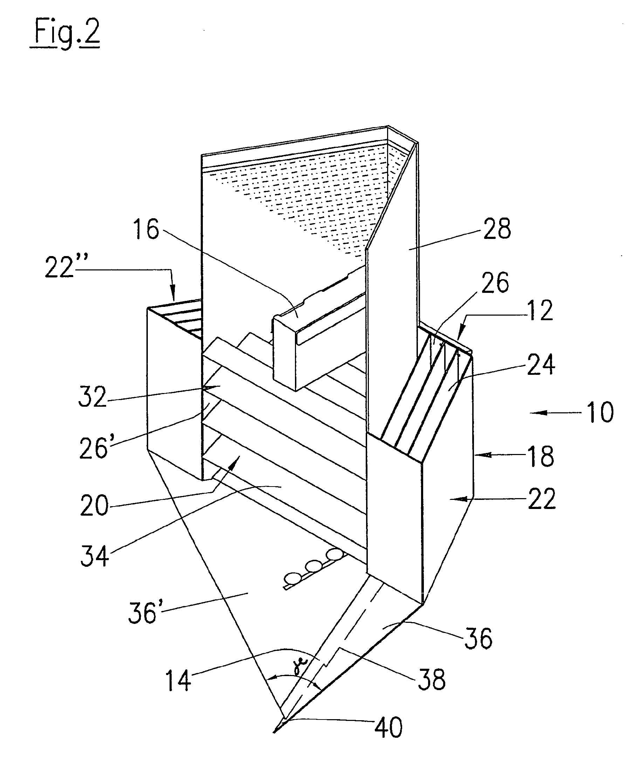

Die in den Figuren 1 und 2 dargestellte Dreiphasen-Trennvorrichtung 10 gemäß eines ersten Ausführungsbeispiels der vorliegenden Erfindung umfasst einen Einlassbereich 12 für das Dreiphasen-Gemisch, einen Auslass 14 für eine an Feststoff reiche Fraktion, einen Auslass 16 für gereinigtes Wasser, einen ersten Separator 18 zur Abtrennung von Gas aus dem Dreiphasen-Gemisch unter Bildung eines Zweiphasen-Gemisches, welches Flüssigkeit und Feststoff enthält, sowie einen zweiten Separator 20 zur Abtrennung von Feststoff aus dem in dem ersten Separator gebildeten Zweiphasen-Gemisch.

Der erste Separator umfasst vier Lamellenblöcke 22, 22', 22", welche jeweils fünf zueinander parallel ausgerichtete Lamellen 24 aufweisen, welche, bezogen auf die Horizontale, eine Neigung von 90° aufweisen, d.h. welche, bezogen auf den Querschnitt der Dreiphasen-Trennvorrichtung 10, senkrecht angeordnet sind, wobei zwischen jeweils zwei benachbarten Lamellen 24 jeweils ein Strömungskanal 26 ausgebildet ist. Dabei begrenzen die, jeweils von dem Querschnitt der Dreiphasen-Trennvorrichtung 10 aus gesehen, äußersten Lamellen 24 der Lamellenblöcke 22, 22', 22" des ersten Separators 18 die Dreiphasen-Trennvorrichtung 10 nach außen. Hingegen sind die, jeweils von der Längsachse der Dreiphasen-Trennvorrichtung 10 aus gesehen, innersten Lamellen der Lamellenblöcke 22, 22', 22" des ersten Separators 18 gegenüber den anderen Lamellen 24 nach oben verlängert und bilden eine Zwischenwand 28 aus, welche den ersten Separator 18 von dem zweiten Separator 20 trennt. Der Einlassbereich 12 für das Dreiphasen-Gemisch wird durch die einzelnen oberen Enden der Lamellen 22, 22', 22" des ersten Separators 18 ausgebildet.

Von den vier Lamellenblöcken 22, 22', 22" des ersten Separators 18 grenzen jeweils zwei Lamellenblöcke 22, 22', 22" mit einer ihrer beiden Seitenflächen unter einem, bezogen auf die Längsrichtung des Lamellenblocks 22, 22', 22", Neigungswinkel von 60° aneinander an und die beiden aus den beiden so aneinander angrenzenden Lamellenblöcken 22, 22', 22" gebildeten Lamellenblockpakete sind jeweils über eine die Seitenflächen der Lamellenblockpakete verbindende Wand 30 miteinander verbunden, so dass die vier Lamellenblöcke 22, 22', 22" und die beiden Wände 30, vom Querschnitt der Dreiphasen-Trennvorrichtung 10 aus gesehen, in der Form eines Hexagons angeordnet sind.

Der zweite Separator 18 umfasst einen Lamellenblock 32, welcher fünf zueinander parallel ausgerichtete Lamellen 34 aufweist, welche, bezogen auf die Horizontale, eine Neigung von etwa 50° aufweisen, wobei zwischen jeweils zwei benachbarten Lamellen 34 jeweils ein Strömungskanal 26' ausgebildet ist. Dabei ist der Lamellenblock 32 des zweiten Separators 18 in der Mitte des von den vier Lamellenblöcken 22, 22', 22" des ersten Separators 18 und den beiden Wänden 30 gebildeten Hexagons angeordnet und grenzt an die vier Lamellenblöcken 22, 22', 22" des ersten Separators 18 an. Oberhalb der Lamellen 34 des zweiten Separators ist der Auslass 16 für gereinigtes Wasser in der Form eines Überlaufs vorgesehen.

Jeweils am unteren Ende der, von der Längsachse der Dreiphasen-Trennvorrichtung 10 aus gesehen, äußersten Lamellen 24 jedes der vier Lamellenblöcke 22, 22', 22" des ersten Separators 18 und an den unteren Ender der beiden Wände 30 ist eine Außenwandung 36, 36' vorgesehen, wobei fünf der sechs Außenwandungen 36, 36', von der Längsachse der Dreiphasen-Trennvorrichtung 10 aus gesehen, nach innen abgewinkelt sind, so dass die Außenwandungen, von der Vertikalen aus gesehen, nach unten unter Ausbildung einer Kehle 38 zusammenlaufen. Dabei verlaufen die die Kehle 38 ausbildenden Außenwandungen 36, 36' zueinander in einem Winkel (γ) von etwa 70°.

An der Kehle 38 ist der Auslass 14 für die an Feststoff reiche Fraktion vorgesehen, wobei der Auslass 14 in der Form eines zu der Kehle 38 parallel verlaufenden Schlitzes ausgebildet ist. Unterhalb des Auslasses 14 ist eine Blende 40 vorgesehen ist, welche eine Verlängerung der Außenwandung 36' ist und welche derart ausgestaltet ist, dass durch den Auslass 14 kein(e) von unterhalb der Dreiphasen-Trennvorrichtung 10 vertikal nach oben strömende(s) Flüssigkeit, Gas oder Feststoff in den Auslass 14 eintreten kann.

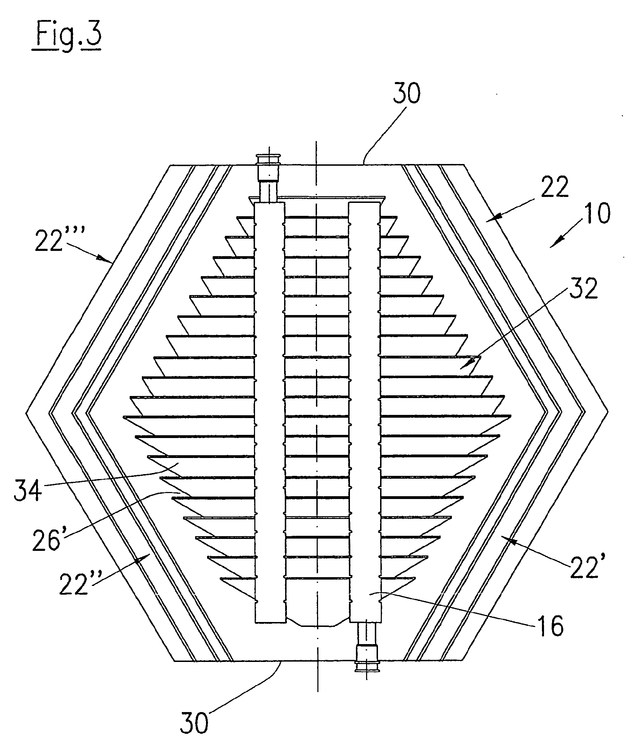

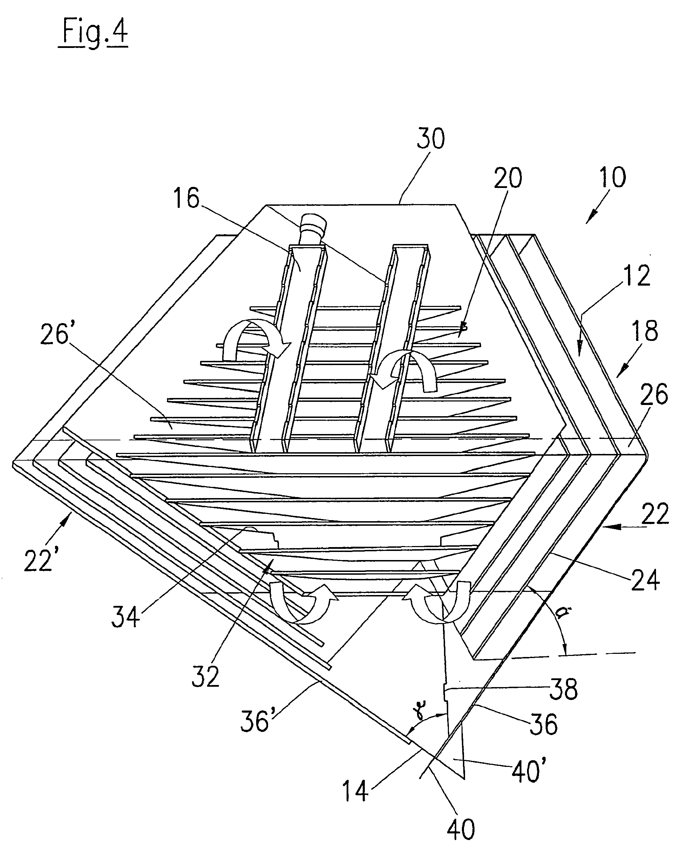

Gleichermaßen zu der in den Figuren 1 und 2 dargestellten, weist die in den Figuren 3 und 4 dargestellte Dreiphasen-Trennvorrichtung 10 gemäß eines zweiten Ausführungsbeispiels der vorliegenden Erfindung einen ersten Separator 18 und einen zweiten Separator 20 auf, wobei der erste Separator 18 vier Lamellenblöcke 22, 22', 22", 22'" und der zweite Separator 20 einen Lamellenblock 32 umfasst. Dabei sind die Wände 30 und die vier Lamellenblöcke 22, 22', 22", 22'" des ersten Separators 18 in der Form eines Hexagons miteinander verbunden, wobei der zweite Separator 20 in der Mitte des Hexagons, an die vier Lamellenblöcke 22, 22', 22", 22'" des ersten Separators 18 angrenzend angeordnet ist.

Im Unterschied zu der in den Figuren 1 und 2 dargestellten Dreiphasen-Trennvorrichtung 10 weisen die einzelnen Lamellen 24 der vier Lamellenblöcke 22, 22', 22", 22'" des ersten Separators 18 der in den Figuren 3 und 4 dargestellten Dreiphasen-Trennvorrichtung 10, bezogen auf die Horizontale, eine Neigung (α) von etwa 60° auf. Im weiteren Unterschied zu der in den Figuren 1 und 2 dargestellten, werden die Außenwände 36, 36' der in den Figuren 3 und 4 dargestellten Dreiphasen-Trennvorrichtung 10 durch die verlängerten äußersten Lamellen 24 der Lamellenblöcke 22, 22', 22", 22'" des ersten Separators 18 ausgebildet. Dabei verlaufen die beiden Außenwände 36, 36' in einem Winkel (γ) von etwa 70° zueinander und diese laufen unter Ausbildung einer Kehle 38 zusammen.

An der Kehle 38 ist der Auslass 14 für die an Feststoff reiche Fraktion vorgesehen, wobei der Auslass 14 in der Form eines zu der Kehle 38 parallel verlaufenden Schlitzes ausgebildet ist. Unterhalb des Auslasses 14 sind zwei Blenden 40, 40' vorgesehen ist, welche jeweils eine Verlängerung der Außenwände 36, 36' sind und welche derart ausgestaltet sind, dass durch den Auslass 14 kein(e) von unterhalb der Dreiphasen-Trennvorrichtung 10 vertikal nach oben strömende(s) Flüssigkeit, Gas oder Feststoff in den Auslass 14 eintreten kann.

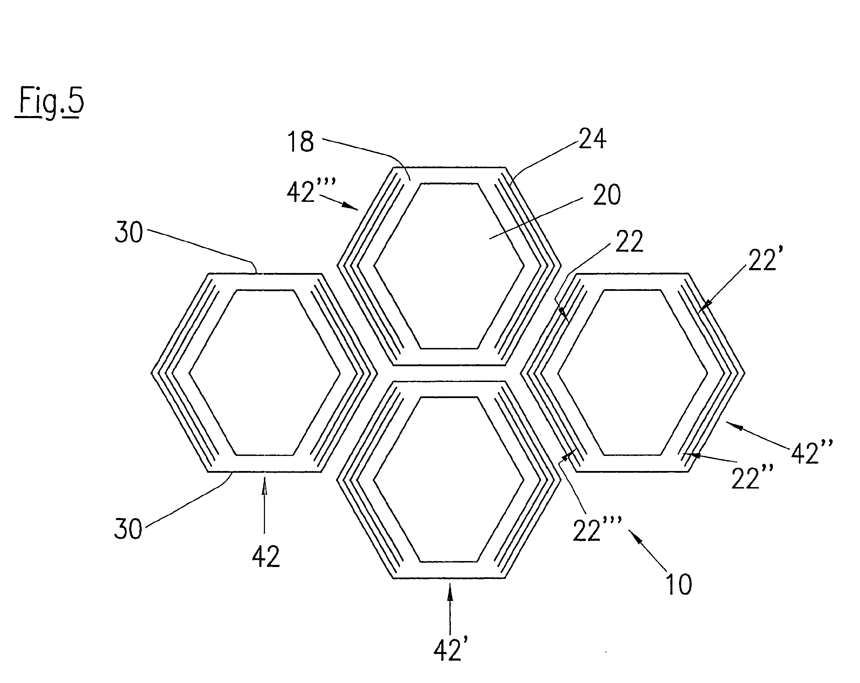

Die in der Fig. 5 dargestellte Dreiphasen-Trennvorrichtung 10 umfasst jeweils vier Lamellenblockagglomerate 42, 42', 42", 42"', von denen jedes wie in den Figuren 1 und 2 dargestellt ausgestaltet ist. Mithin umfasst jedes Lamellenblockagglomerat 42, 42', 42", 42'" einen ersten Separator 18, welcher aus in der Form eines Hexagons angeordneten vier Lamellenblöcken 22, 22', 22", 22'" und zwei Wänden 30 zusammengesetzt ist, wobei in der Mitte des Hexagons der zweite, einen Lamellenblock umfassende Separator 20 angeordnet ist. Durch das Vorsehen von mehreren Lamellenblockagglomeraten 42, 42', 42", 42'" wird ein modulartiger Aufbau der Dreiphasen-Trennvorrichtung 10 erreicht, wodurch es möglich ist, die Form und die Größe der Dreiphasen-Trennvorrichtung an einen bestehenden, damit auszurüstenden Reaktor anzupassen. Ferner kann so die Höhe der einzelnen Lamellenblöcke verglichen mit einer ein Lamellenblockagglomerat umfassenden Dreiphasen-Trennvorrichtung verringert werden.

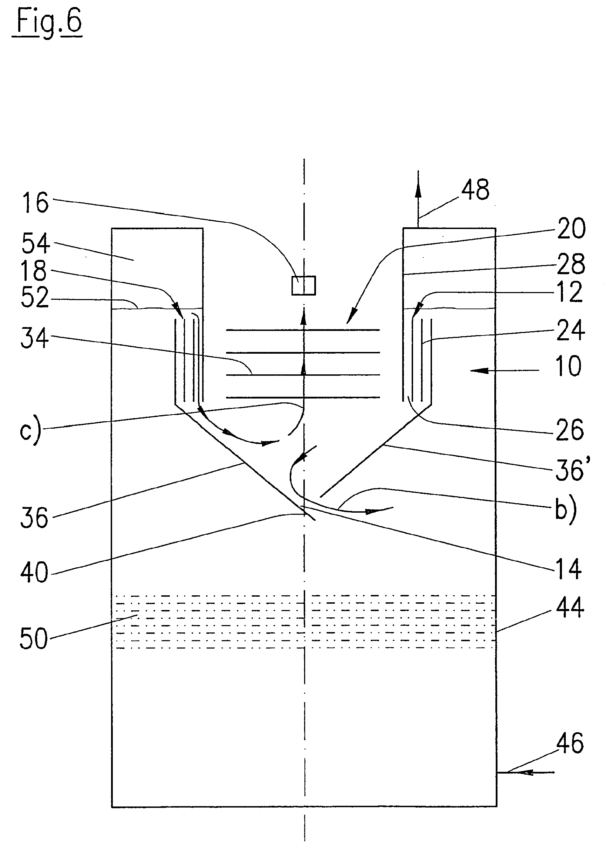

In der Fig. 6 ist schematisch ein Reaktor 44 zur anaeroben Reinigung von Abwasser dargestellt, welcher in seinem oberen Bereich eine Dreiphasen-Trennvorrichtung 10 mit einer wie in den Figuren 1 und 2 dargestellten Ausgestaltung aufweist. Der Reaktor weist zudem an seinem unteren Ende eine Zufuhrleitung für Abwasser 46 sowie an seinem oberen Ende eine Gasbafuhrleitung 48 auf. In dem Bereich zwischen dem untersten und mittleren Drittels des Reaktors 44 ist eine Vielzahl von Pellets 50 aus anaeroben Mikroorganismen vorgesehen, welche durch die beim Betrieb des Reaktors 44 in dem Reaktor 44 aufrecht erhaltene Abwasserströmung in Schwebe gehalten werden.

Beim Betrieb des erfindungsgemäßen, in der Fig. 6 dargestellten Reaktors 44 wird diesem über die Zufuhrleitung 46 kontinuierlich zu reinigendes Abwasser, welches beispielsweise aus einer Papierfabrik stammt, zugeführt, welches über einen Zulaufverteiler (nicht dargestellt) in dem unteren Bereich des Reaktors 44 mit dem in dem Reaktor 44 befindlichen Medium vermischt und durch das oberhalb des Zulaufs befindliche, Mikroorganismenpellets 50 enthaltende Schlammbett geführt wird, wobei die in dem Reaktor 44 befindlichen anaeroben Mikroorganismen die in dem Abwasser enthaltenen organischen Verunreinigungen vorwiegend zu Kohlendioxid und Methan abbauen. Das sich beim Abbau der organischen Verbindungen bildende, insbesondere Methan und Kohlendioxid enthaltende Biogas lagert sich teilweise in Form kleiner Bläschen an die Mikroorganismenpellets 50 an und steigt teilweise in Form freier Gasbläschen in dem Reaktor 44 nach oben. Aufgrund der angelagerten Gasbläschen sinkt das spezifische Gewicht der Pellets 50, weshalb die Pellets 50 in dem Reaktor 44 nach oben steigen.

In dem oberen Bereich des Reaktors befindet sich daher ein Dreiphasen-Gemisch, welches neben dem Wasser und den darin suspendierten Mikroorganismenpellets 50 freie Gasblasen sowie an die Mikroorganismenpellets 50 anhaftende Gasbläschen enthält. Während ein Großteil der Gasblasen, welche nicht an Mikroorganismenpellets 50 angelagert sind, aufgrund ihres hohen Auftriebs und der nach oben gerichteten Flüssigkeitsströmung an dem Einlassbereich 12 der Dreiphasen-Trennvorrichtung 10 vorbei nach oben bis über den oberhalb des Wasserspiegels 52 vorgesehenen Gasraum 54 steigen, tritt das Dreiphasen-Gemisch, welches neben dem Wasser, Mikroorganismenpellets 50, Mikroorganismenpellets 50 mit angelagerten Gasbläschen und vergleichsweise geringe Mengen an freien Gasblasen enthält, über den Einlassbereich 12 in die Dreiphasen-Trennvorrichtung 10 ein, wo dieses von oben nach unten durch die zwischen den Lamellen 24 der Lamellenblöcke 22, 22', 22", 22'" vorgesehenen Strömungskanäle 26 strömt. Dabei bildet sich in den einzelnen Strömungskanälen 26 ein über den Querschnitt der Strömungskanäle 26 parabolisch verlaufendes Geschwindigkeitsprofil aus, infolge dessen sich zwischen benachbarten Mikroorganismenpellets 50 mit angelagerten Gasbläschen aufgrund von Reibungskräften Druckgradienten ergeben, aufgrund der sich die an die Mikroorganismenpellets 50 angelagerten Gasbläschen von den Mikroorganismenpellets 50 ablösen und zusammen mit den anderen freien Gasblasen in den Lamellen 24 des ersten Separators 18 nach oben steigen und die Dreiphasen-Trennvorrichtung 10 über den Einlassbereich 12 verlassen und bis in den Gasraum 54 nach oben steigen. Aufgrund dessen wird in dem ersten Separator 18 das Gas vollständig aus dem Dreiphasen-Gemisch abgetrennt, so dass aus den Strömungskanälen 26 des ersten Separators 18 unten ein Zweiphasen-Gemisch austritt, welches nur noch das Wasser und Mikroorganismenpellets (ohne anhaftende Gasbläschen) enthält.

Ein Teilstrom des unten aus dem ersten Separator 18 austretenden Zweiphasen-Gemisches, welcher in der Fig. 6 durch den mit c) gekennzeichneten Pfeil dargestellt ist, wird aufgrund der Strömungsverhältnisse in der Dreiphasen-Trennvorrichtung 10 von unten nach oben durch die Lamellen 34 des zweiten Separators 20 geführt. Dabei bildet sich in den einzelnen Strömungskanälen 26' des zweiten Separators 20 ein über den Querschnitt der Strömungskanäle 26' parabolisch verlaufendes Geschwindigkeitsprofil aus, infolge dessen sich die Mikroorganismenpellets 50 in den Strömungskanälen 26' aufgrund der sich aus der senkrecht nach unten gerichteten Schwerkraft und der nach schräg oben gerichteten hydraulischen Kraft ergebenden Kraft zu den Wänden der Lamellen 34 hin bewegen. Da die hydraulische Kraft in Richtung der Wände der Lamellen 34 aufgrund des über den Querschnitt der Strömungskanäle 26' parabolisch verlaufenden Geschwindigkeitsprofils abnimmt, sinken die Mikroorganismenpellets 50 schließlich an den Wänden der Lamellen 34 in den Strömungskanälen 26' nach unten und verlassen den zweiten Separator 20 nach unten, wohingegen das gereinigte Wasser, aus dem die Mikroorganismenpellets 50 abgetrennt wurden, in den Strömungskanälen 26' nach oben steigt und den zweiten Separator 20 oben verlässt, wo dieses in den Auslass 16 gelangt, über den das gereinigte Wasser aus dem Reaktor 44 abgeführt wird.

Infolge dessen sammeln sich die Mikroorganismenpellets 50 in dem unteren Bereich der Dreiphasen-Trennvorrichtung 10 an und werden mit dem anderen Teilstrom, welcher in der Fig. 6 durch den mit b) gekennzeichneten Pfeil dargestellt ist, durch den Auslass 14 aus der Dreiphasen-Trennvorrichtung 10 abgeführt. Durch die Blende 40 wird zuverlässig verhindert, dass in dem Reaktor 44 von unten nach oben strömendes Dreiphasen-Gemisch über den Auslass 14 in die Dreiphasen-Trennvorrichtung 10 eintritt.

Das Verhältnis zwischen dem ersten, in der Fig. 6 durch den mit c) gekennzeichneten Pfeil dargestellten, in den zweiten Separator 20 führenden Teilstrom zu dem über den Auslass 14 aus der Dreiphasen-Trennvorrichtung 10 abgeführten, in der Fig. 6 durch den mit b) gekennzeichneten Pfeil dargestellten Teilstrom wird wesentlich durch die Druckdifferenz über den Auslass 14, d.h. durch die Differenz des Drucks an der, von der Dreiphasen-Trennvorrichtung 10 aus gesehen, Innenseite des Auslasses 14 und des Drucks an der Außenseite des Auslasses 14, und durch die Größe der Fläche des Auslasses 14 bestimmt. Dabei gilt, dass bei konstanter Druckdifferenz über den Auslass 14 der in der Fig. 6 durch den mit b) gekennzeichneten Pfeil dargestellte Teilstrom umso größer wird, desto größer die Fläche des Auslasses 14 ist, wodurch auch die Strömungsgeschwindigkeit des Gemisches durch den ersten Separator 18 erhöht wird. Um die Strömungsgeschwindigkeit durch den ersten Separator 18 unterhalb eines kritischen Grenzwertes zu halten, ab dem freie Gasblasen aus dem außerhalb der Dreiphasen-Trennvorrichtung 10 vorliegenden Mediums vermehrt in den ersten Separator 18 eindringen, wird die Fläche des Auslasses 14 für die an Feststoff reiche Fraktion aus der Dreiphasen-Trennvorrichtung 10 vorzugsweise so dimensioniert, dass die Eintrittsgeschwindigkeit bzw. Strömungsgeschwindigkeit des Dreiphasen-Gemisches in den Einlassbereich 12 des ersten Separators 18 geringer ist als die Aufstiegsgeschwindigkeit der (freien) Gasblasen in dem Dreiphasen-Gemisch. Dadurch wird gewährleistet, dass alle in der Dreiphasen-Trennvorrichtung 10 abgetrennten Mikroorganismenpellets 50 aus der Dreiphasen-Trennvorrichtung 10 abgeführt werden und zugleich eine zu hohe Strömungsgeschwindigkeit in dem ersten Separator 18 vermieden wird.

Dementsprechend ist es bevorzugt, dass die Fläche des Auslasses 14 verstellbar ist, so dass während des Betriebes der Dreiphasen-Trennvorrichtung 10 das Verhältnis des Teilstroms b) zu dem Teilstrom c) den Anforderungen entsprechend optimiert werden kann. Beispielsweise kann durch eine Verringerung der Fläche das Verhältnis des Teilstroms b) zu dem Teilstrom c) verringert werden, so dass mehr von den flockigen Mikroorganismenstrukturen in dem Reaktor 44 zurückgehalten werden. Andererseits ist es auch möglich, durch eine Vergrößerung der Fläche des Auslasses 14, das Verhältnis des Teilstroms b) zu dem Teilstrom c) zu erhöhen, so dass sich in dem Reaktor 44 mehr granulatförmige Mikroorganismenstrukturen anreichern.

Aus den gleichen Gründen, nämlich der Optimierung der Selektivität der Schlammcharakteristika in dem Reaktor 44, kann auch die Gesamtfläche der Strömungskanäle 26' des zweiten Separators 20 verstellbar vorgesehen sein, um während des Betriebes der Dreiphasen-Trennvorrichtung 10 die Beschickung des zweiten Separators 20 flexibel gestalten zu können. Beispielsweise können über ein Schiebeelement (nicht dargestellt), welches vorzugsweise in dem Auslass 16 für gereinigtes Wasser vorgesehen ist, einige der Strömungskanäle 26' des zweiten Separators 20 während des Betriebes stillgelegt werden, infolge dessen sich die Strömungsgeschwindigkeit durch die restlichen Strömungskanäle 26' erhöht, wodurch leichte flockige Feststoffstrukturen aus dem Reaktor 44 ausgewaschen werden können. Sofern ein oder mehrere solche Schiebeelemente in dem Auslass 16 vorgesehen sind, muss der Auslass 16 für den vorgenannten Zweck mit den oberen Enden der Lamellen 34 des zweiten Separators 20 oder mit einer Verlängerung der Lamellen 34 verbunden sein.

### Bezugszeichenliste

- 10: Dreiphasen-Trennvorrichtung
- 12: Einlassbereich für das Dreiphasen-Gemisch
- 14: Auslass für an Feststoff reiche Fraktion
- 16: Auslass/Abfuhrleitung für Flüssigkeit/gereinigtes Wasser
- 18: erster Separator
- 20: zweiter Separator
- 22, 22', 22", 22'": Lamellenblock des ersten Separators
- 24: Lamelle des ersten Separators
- 26, 26': Strömungskanal
- 28: Zwischenwand
- 30: Wand
- 32: Lamellenblock des zweiten Separators
- 34: Lamelle des zweiten Separators
- 36, 36': Außenwand(ung)
- 38: Kehle
- 40, 40': Blende
- 42, 42', 42", 42'": Lamellenblockagglomerat
- 44: anaerober Reaktor
- 46: Zufuhrleitung für Abwasser
- 48: Gasabfuhrleitung
- 50: Mikroorganismenpellets
- 52: Wasserspiegel
- 54: Gasraum

## Patentansprüche

1. Dreiphasen-Trennvorrichtung (10) zur Abtrennung von Gas und Feststoff aus einem Flüssigkeit, Gas und Feststoff enthaltenden Dreiphasen-Gemisch umfassend:
- einen Einlassbereich (12) für das Dreiphasen-Gemisch,
- einen Auslass (14) für eine an Feststoff reiche Fraktion,
- einen Auslass (16) für Flüssigkeit,
- einen ersten Separator (18) zur Abtrennung von Gas aus dem Dreiphasen-Gemisch unter Bildung eines Zweiphasen-Gemisches, welches Flüssigkeit und Feststoff enthält, wobei der erste Separator (18) den Einlassbereich (12) für das Dreiphasen-Gemisch ausbildet oder mit dem Einlassbereich (12) für das Dreiphasen-Gemisch verbunden ist, wobei der erste Separator (18) vier Lamellenblöcke (22, 22', 22", 22'") mit jeweils wenigstens drei zueinander parallelen Lamellen (24) aufweist, zwischen denen jeweils ein Strömungskanal (26) ausgebildet ist, und, wobei der erste Separator (18) so ausgestaltet ist, dass das durch den Einlassbereich (12) eintretende Gemisch in den Strömungskanälen (26), bezogen auf die Vertikale, von oben nach unten geführt wird, und
- einen zweiten Separator (20) zur Abtrennung von Feststoff aus dem in dem ersten Separator (18) gebildeten Zweiphasen-Gemisch, wobei der zweite Separator (20) einen Lamellenblock (32) mit wenigstens drei zueinander parallelen Lamellen (34) aufweist, zwischen denen jeweils ein Strömungskanal (26') ausgebildet ist, und wobei der zweite Separator (20) so ausgestaltet und bezogen auf den ersten Separator (18) so angeordnet ist, dass das aus dem ersten Separator (18) austretende Zweiphasen-Gemisch, bezogen auf die Vertikale, von unten in die Strömungskanäle (26') des zweiten Separators (20) eintritt und in diesen nach oben geführt wird,
wobei die Dreiphasen-Trennvorrichtung (10) so ausgestaltet ist, dass das Dreiphasen-Gemisch nur über den Einlassbereich (12) in den ersten Separator (18) der Dreiphasen-Trennvorrichtung (10) eintreten kann, und, wobei
i) jeder Lamellenblock (22, 22', 22", 22'") des ersten Separators an jeder seiner beiden Seitenflächen an eine Seitenfläche eines anderen Lamellenblocks (22, 22', 22", 22'") angrenzt, so dass die einzelnen Lamellenblöcke (22, 22', 22", 22'"), vom Querschnitt der Dreiphasen-Trennvorrichtung (10) aus gesehen, in der Form einer Raute angeordnet sind, und der zweite Separator (20) einen Lamellenblock (32) aufweist, welcher, vom Querschnitt der Dreiphasen-Trennvorrichtung (10) aus gesehen, in der Mitte der von den vier Lamellenblöcken (22, 22', 22", 22'") des ersten Separators (18) gebildeten Raute angeordnet ist oder
ii) jeweils zwei Lamellenblöcke (22, 22', 22", 22"') des ersten Separators mit einer ihrer beiden Seitenflächen unter einem, bezogen auf die Längsrichtung des Lamellenblocks (22, 22', 22", 22'"), Neigungswinkel von 10° bis 80° aneinander angrenzen und die beiden aus den beiden so aneinander angrenzenden Lamellenblöcken (22, 22', 22", 22'") gebildeten Lamellenblockpakete über jeweils eine die Seitenflächen der Lamellenblockpakete verbindende Wand (30) miteinander verbunden sind, so dass die vier Lamellenblöcke (22, 22', 22", 22'") und die beiden Wände (30), vom Querschnitt der Dreiphasen-Trennvorrichtung (10) aus gesehen, in der Form eines Hexagons angeordnet sind, und der zweite Separator (20) einen Lamellenblock (32) aufweist, welcher, vom Querschnitt der Dreiphasen-Trennvorrichtung (10) aus gesehen, in der Mitte des von den vier Lamellenblöcken (22, 22', 22", 22'") und den beiden Wänden (30) des ersten Separators (18) gebildeten Hexagons angeordnet ist.

2. Dreiphasen-Trennvorrichtung (10) nach Anspruch 1,
**dadurch gekennzeichnet, dass**
der erste Separator (18) vier Lamellenblöcke (22, 22', 22", 22'") umfasst, welche aus 5 bis 10 zueinander parallelen Lamellen (24) aufgebaut ist, zwischen denen jeweils ein Strömungskanal (26) ausgebildet ist.

3. Dreiphasen-Trennvorrichtung (10) nach Anspruch 1 oder 2,
**dadurch gekennzeichnet, dass**
der zweite Separator (20) einen Lamellenblock (32) umfasst, welcher aus 10 bis 20 zueinander parallelen Lamellen (34) aufgebaut ist, zwischen denen jeweils ein Strömungskanal (26') ausgebildet ist.

4. Dreiphasen-Trennvorrichtung (10) nach zumindest einem der Ansprüche 1 bis 3,
**dadurch gekennzeichnet, dass**
die einzelnen Lamellen (24) der vier Lamellenblöcke (22, 22', 22", 22'") des ersten Separators (18) und/oder der Lamellenblock (32) des zweiten Separators (20), bezogen auf die Horizontale, eine Neigung (α) zwischen 20° und 100° aufweisen.

5. Dreiphasen-Trennvorrichtung (10) nach Anspruch 4, **dadurchgekennzeichnet,** dass
die einzelnen Lamellen der vier Lamellenblöcke (22, 22', 22", 22"') des ersten Separators (18), bezogen auf die Horizontale, eine Neigung (α) zwischen 80° und 100° aufweisen.

6. Dreiphasen-Trennvorrichtung (10) nach Anspruch 4 oder 5,
**dadurch gekennzeichnet, dass**
die einzelnen Lamellen des Lamellenblocks (32) des zweiten Separators (20), bezogen auf die Horizontale, eine Neigung (α) zwischen 20° und 80° aufweisen.

7. Dreiphasen-Trennvorrichtung (10) nach zumindest einem der vorstehenden Ansprüche,
**dadurch gekennzeichnet, dass**
der erste Separator (18) vier Lamellenblöcke (22, 22', 22", 22'") umfasst, welche jeweils wenigstens drei zueinander parallele Lamellen (24) mit jeweils dazwischen ausgebildeten Strömungskanälen (26) aufweisen, wobei die Lamellen (24) der einzelnen Lamellenblöcke (22, 22', 22", 22'"), bezogen auf die Horizontale, eine Neigung (α) zwischen 20° und 100° aufweisen.

8. Dreiphasen-Trennvorrichtung (10) nach zumindest einem der vorstehenden Ansprüche,
**dadurchgekennzeichnet, dass**
die Stirnfläche(n) der vier Lamellenblöcke (22, 22', 22", 22'") des ersten Separators (18) die Dreiphasen-Trennvorrichtung (10) nach außen begrenzen.

9. Dreiphasen-Trennvorrichtung (10) nach zumindest einem der vorstehenden Ansprüche,
**dadurch gekennzeichnet, dass**
der erste Separator (18) wenigstens zwei Lamellenblockagglomerate (42, 42', 42", 42'") umfasst, von denen jedes Lamellenblockagglomerat (42, 42', 42", 42'") vier Lamellenblöcke (22, 22', 22", 22'") umfasst, wobei jeweils zwei Lamellenblöcke (22, 22', 22", 22'") eines jeden Lamellenblockagglomerats (42, 42', 42", 42'") mit einer ihrer beiden Seitenflächen unter einem, bezogen auf die Längsrichtung des Lamellenblocks (22, 22', 22", 22'"), Neigungswinkel von 10° bis 80° aneinander angrenzen und die beiden aus den beiden so aneinander angrenzenden Lamellenblöcken (22, 22', 22", 22"') gebildeten Lamellenblockpakete über jeweils eine die Seitenflächen der Lamellenblockpakete verbindende Wand (30) miteinander verbunden sind, so dass die vier Lamellenblöcke (22, 22', 22", 22'") und die beiden Wände (30) eines jeden Lamellenblockagglomerats (42, 42', 42", 42'"), vom Querschnitt der Dreiphasen-Trennvorrichtung (10) aus gesehen, in der Form eines Hexagons angeordnet sind, und in der Mitte jedes Hexagons der zweite Separator angeordnet ist.

10. Dreiphasen-Trennvorrichtung (10) nach zumindest einem der vorstehenden Ansprüche,
**dadurch gekennzeichnet, dass**
der Einlassbereich (12) für das Dreiphasen-Gemisch durch die oberen Enden der einzelnen Lamellen (24) der vier Lamellenblöcke (22, 22', 22", 22'") des ersten Separators (18) ausgebildet wird.

11. Dreiphasen-Trennvorrichtung (10) nach zumindest einem der vorstehenden Ansprüche,
**dadurch gekennzeichnet, dass**
zwischen dem Lamellenblock (32) des zweiten Separators (20) und den vier Lamellenblöcken (22, 22', 22", 22'") des ersten Separators (18) eine Zwischenwand (28) vorgesehen ist, welche, von der Vertikalen aus gesehen, über das obere Ende des ersten Separators (18) hinausgeht.

12. Dreiphasen-Trennvorrichtung (10) nach Anspruch 11,
**dadurch gekennzeichnet, dass**
die Zwischenwand (28) die, von der Längsachse der Dreiphasen-Trennvorrichtung (10) aus gesehen, innersten Lamellen der an den zweiten Separator (20) angrenzenden Lamellenblöcke (22, 22', 22", 22'") des ersten Separators (18) ist, wobei die innersten Lamellen höher ist als die anderen Lamellen (24) derselben Lamellenblöcke (22, 22', 22", 22'") sind.

13. Dreiphasen-Trennvorrichtung (10) nach zumindest einem der vorstehenden Ansprüche,
**dadurch gekennzeichnet, dass**
der Auslass (16) für Flüssigkeit oberhalb des oberen Endes des Lamellenblocks (32) des zweiten Separators (20) angeordnet ist.

14. Dreiphasen-Trennvorrichtung (10) nach zumindest einem der Ansprüche 7 bis 13,
**dadurch gekennzeichnet, dass**
jeweils am unteren Ende der, von der Längsachse der Dreiphasen-Trennvorrichtung (10) aus gesehen, äußersten Lamellen jedes der Lamellenblöcke (22, 22', 22", 22'") des ersten Separators (18) eine Außenwandung (36, 36') vorgesehen ist.

15. Dreiphasen-Trennvorrichtung (10) nach Anspruch 14,
**dadurch gekennzeichnet, dass**
wenigstens zwei der Außenwandungen (36, 36'), von der Längsachse der Dreiphasen-Trennvorrichtung (10) aus gesehen, nach innen abgewinkelt sind, so dass die Außenwandungen, von der Vertikalen aus gesehen, nach unten unter Ausbildung einer Kehle (38) zusammenlaufen.

16. Dreiphasen-Trennvorrichtung (10) nach Anspruch 15,
**dadurch gekennzeichnet, dass**
die die Kehle (38) ausbildenden Außenwandungen zueinander in einem Winkel (γ) von 30° bis 120° verlaufen.

17. Dreiphasen-Trennvorrichtung (10) nach Anspruch 15 oder 16, **dadurch gekennzeichnet, dass** ein Auslass (14) für die an Feststoff reiche Fraktion an der Kehle (38) vorgesehen ist, wobei der Auslass (14) in der Form eines zu der Kehle (38) parallel verlaufenden Schlitzes ausgebildet ist.

18. Dreiphasen-Trennvorrichtung (10) nach Anspruch 17,
**dadurch gekennzeichnet, dass**
unterhalb des Auslasses (14) eine Blende (40, 40') vorgesehen ist, welche derart ausgestaltet ist, dass durch den Auslass (14) kein(e) von unterhalb der Dreiphasen-Trennvorrichtung (10) vertikal nach oben strömende(s) Flüssigkeit, Gas oder Feststoff in die Dreiphasen-Trennvorrichtung (10) eintreten kann.

19. Reaktor, welcher in seinem oberen Bereich eine Dreiphasen-Trennvorrichtung (10) nach zumindest einem der vorstehenden Ansprüche aufweist.

20. Reaktor nach Anspruch 19,
**dadurch gekennzeichnet, dass**
dieser ein anaerober oder aerober Reaktor (44) zur Reinigung von Abwasser oder Prozesswasser ist, welcher wenigstens eine Zufuhrleitung (46) zur Zuführung von zu reinigendem Abwasser oder Prozesswasser in den Reaktor (44) sowie wenigstens eine Abfuhrleitung (16) zur Abführung von gereinigtem Abwasser oder Prozesswasser aus dem Reaktor (44) aufweist.

21. Verfahren zur Abtrennung von Gas und Feststoff aus einem Flüssigkeit, Gas und Feststoff enthaltenden Dreiphasen-Gemisch, umfassend die nachfolgenden Schritte:
a) Einführen des Dreiphasen-Gemisches über einen Einlassbereich (12) in den ersten Separator (18) einer Dreiphasen-Trennvorrichtung (10) eines Reaktors nach Anspruch 20, wobei der erste Separator (18) den Einlassbereich (12) für das Dreiphasen-Gemisch ausbildet oder mit dem Einlassbereich (12) für das Dreiphasen-Gemisch verbunden ist,
b) Führen des Dreiphasen-Gemisches, bezogen auf die Vertikale, von oben nach unten durch die Strömungskanäle (26) des ersten Separators (18), um Gas aus dem Dreiphasen-Gemisch unter Bildung eines Zweiphasen-Gemisches abzutrennen,
c) Abziehen des Zweiphasen-Gemisches aus dem ersten Separator (18),
d) Einführen zumindest eines Teils des Zweiphasen-Gemisches in den zweiten Separator (20),
e) Führen des Zweiphasen-Gemisches, bezogen auf die Vertikale, von unten nach oben durch die Strömungskanäle (26') des zweiten Separators (20), um Feststoff aus dem Zweiphasen-Gemisch unter Bildung einer gereinigten Flüssigkeit und einer an Feststoff reichen Fraktion abzutrennen,
f) Abführen der gereinigten Flüssigkeit aus dem zweiten Separator (20) und
g) Abführen der an Feststoff reichen Fraktion durch einen Auslass (14) aus der Dreiphasen-Trennvorrichtung (10),
wobei in den zweiten Separator (20) nur aus dem ersten Separator (18) abgeführtes Zweiphasen-Gemisch, aber kein Dreiphasen-Gemisch eingeführt wird.

## Claims

1. Three-phase separator (10) for separating gas and solids from a three-phase mixture containing liquid, gas and solids, comprising:
- an inlet region (12) for the three-phase mixture,
- an outlet (14) for a fraction rich in solids,
- an outlet (16) for liquid,
- a first separator (18) for separating gas from the three-phase mixture, forming a two-phase mixture which contains liquid and solids, the first separator (18) forming the inlet region (12) for the three-phase mixture or being connected to the inlet region (12) for the three-phase mixture, the first separator (18) having four plate blocks (22, 22', 22'', 22"') each having at least three mutually parallel plates (24), between which a flow channel (26) is formed in each case, and the first separator (18) being configured such that the mixture entering through the inlet region (12) is led from top to bottom in the flow channels (26), relative to the vertical, and
- a second separator (20) for separating solids from the two-phase mixture formed in the first separator (18), the second separator (20) having a plate block (32) having at least three mutually parallel plates (34), between which a flow channel (26') is formed in each case, and the second separator (20) being configured and arranged in relation to the first separator (18) such that the two-phase mixture emerging from the first separator (18) enters the flow channels (26') of the second separator (20) from below, relative to the vertical, and is led upward in said channels,
wherein the three-phase separator (10) is configured in such a way that the three-phase mixture can enter the first separator (18) of the three-phase separator (10) only via the inlet region (12), and, wherein
each of the two side surfaces of each plate block (22, 22', 22'', 22''') of the first separator adjoins a side surface of another plate block (22, 22', 22 ", 22"'), so that the individual plate blocks (22, 22', 22'', 22"'), as seen from the cross section of the three-phase separator (10), are arranged in the form of a lozenge, and the second separator (20) has one plate block (32) which, as seen from the cross section of the three-phase separator (10), is arranged in the middle of the lozenge formed by the four plate blocks (22, 22', 22'', 22"') of the first separator (18) or
in each case one of the two side surfaces of two plate blocks (22, 22', 22'', 22"') of the first separator adjoins each other at an angle of inclination of 10° to 80° relative to the longitudinal direction of the plate block (22, 22', 22'', 22"'), and the two plate block packs formed from the two plate blocks (22, 22', 22'', 22"') that adjoin each other in this way are connected to each other via a wall (30) connecting the side surfaces of the plate block packs in each case, so that the four plate blocks (22, 22', 22'', 22"') and the two walls (30), as seen from the cross section of the three-phase separator (10), are arranged in the form of a hexagon, and the second separator (20) has one plate block (32) which, as seen from the cross section of the three-phase separator (10), is arranged in the middle of the hexagon formed by the four plate blocks (22, 22', 22'', 22"') and the two walls (30) of the first separator (18).

2. Three-phase separator (10) according to Claim 1,
**characterized in that**
the first separator (18) comprises four plate blocks (22, 22', 22'', 22"') which are built up from 5 to 10 mutually parallel plates (24),
between which a flow channel (26) is formed in each case.

3. Three-phase separator (10) according to Claim 1 or 2,
**characterized in that**
the second separator (20) comprises a plate block (32) which is built up from 10 to 20 mutually parallel plates (34), between which a flow channel (26') is formed in each case.

4. Three-phase separator (10) according to at least one of Claims 1 to 3,
**characterized in that**
the individual plates (24) of the four plate blocks (22, 22', 22'', 22"') of the first separator (18) and/or the plate block (32) of the second separator (20) have an inclination (α) between 20° and 100° relative to the horizontal.

5. Three-phase separator (10) according to Claim 4,
**characterized in that**
the individual plates of the four plate blocks (22, 22', 22'', 22"') of the first separator (18) have an inclination (α) between 80° and 100° relative to the horizontal.

6. Three-phase separator (10) according to Claim 4 or 5,
**characterized in that**
the individual plates of the plate block (32) of the second separator (20) have an inclination (α) between 20° and 80° relative to the horizontal.

7. Three-phase separator (10) according to at least one of the preceding claims,
**characterized in that**
the first separator (18) comprises four plate blocks (22, 22', 22'', 22"') which in each case have at least three mutually parallel plates (24) having flow channels (26) formed therebetween in each case, the plates (24) of the individual plate blocks (22, 22', 22'', 22"') having an inclination (α) between 20° and 100° relative to the horizontal.

8. Three-phase separator (10) according to at least one of the preceding claims,
**characterized in that**
the end face(s) of the four plate blocks (22, 22', 22'', 22"') of the first separator (18) bound the three-phase separator (10) on the outside.

9. Three-phase separator (10) according to at least one of the preceding claims,
**characterized in that**
the first separator (18) comprises at least two plate block assemblies (42, 42', 42'', 42"'), of which each plate block assembly (42, 42', 42'', 42"') comprises four plate blocks (22, 22', 22'', 22"'), in each case one of the two side surfaces of two plate blocks (22, 22', 22'', 22"') of each plate block assembly (42, 42', 42'', 42"') adjoining each other at an angle of inclination of 10° to 80°, in relation to the longitudinal direction of the plate block (22, 22', 22'', 22"'), and the two plate block packs formed from the two plate blocks (22, 22', 22'', 22"') that adjoin each other in this way being connected to each other via a wall (30) connecting the side surfaces of the plate block packs in each case, so that the four plate blocks (22, 22', 22'', 22"') and the two walls (30) of each plate block assembly (42, 42', 42'', 42"'), as seen from the cross section of the three-phase separator (40), are arranged in the form of a hexagon, and in the middle of each hexagon the second separator is arranged.

10. Three-phase separator (10) according to at least one of the preceding claims,
**characterized in that**
the inlet region (12) for the three-phase mixture is formed by the upper ends of the individual plates (24) of the four plate blocks (22, 22', 22'', 22"') of the first separator (18).

11. Three-phase separator (10) according to at least one of the preceding claims,
**characterized in that**
an intermediate wall (28) is provided between the plate block (32) of the second separator (20) and the four plate blocks (22, 22', 22'', 22"') of the first separator (18), said intermediate wall (28), as seen from the vertical, projecting beyond the upper end of the first separator (18).

12. Three-phase separator (10) according to Claim 11,
**characterized in that**
the intermediate wall (28), as seen from the longitudinal axis of the three-phase separator (10), is the innermost plates of the plate blocks (22, 22', 22'', 22"') that belong to the first separator (18) and adjoin the second separator (18), the innermost plates being higher than the other plates (24) of the same plate blocks (22, 22', 22'', 22"').

13. Three-phase separator (10) according to at least one of the preceding claims,
**characterized in that**
the outlet (16) for liquid is arranged above the upper end of the plate block (32) of the second separator (20).

14. Three-phase separator (10) according to at least one of Claims 7 to 13,
**characterized in that**
an outer wall (36, 36') is provided in each case at the lower end of the outermost plates of each of the plate blocks (22, 22', 22'', 22"') of the first separator (18), as seen from the longitudinal axis of the three-phase separator (10).

15. Three-phase separator (10) according to Claim 14,
**characterized in that**
at least two of the outer walls (36, 36'), as seen from the longitudinal axis of the three-phase separator (10), are angled down inward, so that the outer walls, as seen from the vertical, run together downward, forming a throat (38).

16. Three-phase separator (10) according to Claim 15,
**characterized in that**
the outer walls forming the throat (38) run at an angle (γ) to each other from 30° to 120°.

17. Three-phase separator (10) according to Claim 15 or 16,
**characterized in that**
an outlet (14) for the fraction rich in solids is provided on the throat (38), the outlet (14) being constructed in the form of a slot running parallel to the throat (38).

18. Three-phase separator (10) according to Claim 17,
**characterized in that**
a baffle (40, 40') is provided underneath the outlet (14) and is configured in such a way that no liquid, gas or solids flowing vertically upward from underneath the three-phase separator (10) can enter the outlet (14) through the outlet (14).

19. Reactor which has a three-phase separator (10) according to at least one of the preceding claims in its upper region.

20. Reactor according to Claim 19,
**characterized in that**
said reactor is an anaerobic or aerobic reactor (44) for purifying effluent or process water, which has at least one feed line (46) for feeding effluent or process water to be purified into the reactor (44) and at least one discharge line (16) for discharging purified effluent or process water from the reactor (44).

21. Process for separating gas and solids from a three-phase mixture containing liquid, gas and solids, comprising the following steps:
a) introducing the three-phase mixture via an inlet region (12) into the first separator (18) of a three-phase separator (10) of a reactor according to Claim 20, the first separator (18) forming the inlet region (12) for the three-phase mixture or being connected to the inlet region (12) for the three-phase mixture,
b) leading the three-phase mixture from top to bottom through the flow channels (26) of the first separator (18), in relation to the vertical, in order to separate gas from the three-phase mixture, forming a two-phase mixture,
c) extracting the two-phase mixture from the first separator (18),
d) introducing at least some of the two-phase mixture into the second separator (20),
e) leading the two-phase mixture from bottom to top through the flow channels (26') of the second separator (20), in relation to the vertical, in order to separate solids from the two-phase mixture, forming a purified liquid and a fraction rich in solids,
f) discharging the purified liquid from the second separator (20), and
g) discharging the fraction rich in solids from the three-phase separator (10) through an outlet (14),
only two-phase mixture discharged from the first separator (18) but no three-phase mixture being introduced into the second separator (20).

## Revendications

1. Dispositif de séparation de trois phases (10) pour la séparation d'un gaz et d'un solide d'un mélange triphasé contenant un liquide, un gaz et un solide, comprenant :
- une zone d'entrée (12) pour le mélange triphasé,
- une sortie (14) pour une fraction riche en solide,
- une sortie (16) pour un liquide,
- un premier séparateur (18) pour la séparation d'un gaz du mélange triphasé avec formation d'un mélange biphasé qui contient un liquide et un solide, le premier séparateur (18) formant la zone d'entrée (12) pour le mélange triphasé ou étant relié avec la zone d'entrée (12) pour le mélange triphasé, le premier séparateur (18) comprenant quatre blocs lamellaires (22, 22', 22'', 22"') contenant chacun au moins trois lamelles parallèles les unes aux autres (24), entre lesquelles un canal d'écoulement (26) est formé à chaque fois, et le premier séparateur (18) étant configuré de sorte que le mélange qui entre dans la zone d'entrée (12) s'écoule du haut vers le bas dans les canaux d'écoulement (26), par rapport à la verticale, et
- un second séparateur (20) pour la séparation d'un solide du mélange biphasé formé dans le premier séparateur (18), le second séparateur (20) comprenant un bloc lamellaire (32) contenant au moins trois lamelles parallèles les unes aux autres (34), entre lesquelles un canal d'écoulement (26') est formé à chaque fois, et le second séparateur (20) étant configuré et agencé par rapport au premier séparateur (18) de sorte que le mélange biphasé qui sort du premier séparateur (18) entre par le bas, par rapport à la verticale, dans les canaux d'écoulement (26') du second séparateur (20) et s'écoule vers le haut dans ceux-ci,
le dispositif de séparation de trois phases (10) étant configuré de sorte que le mélange triphasé ne puisse entrer que par la zone d'entrée (12) dans le premier séparateur (18) du dispositif de séparation de trois phases (10), et
i) chaque bloc lamellaire (22, 22', 22'', 22"') du premier séparateur étant adjacent au niveau de chacune de ses deux surfaces latérales à une surface latérale d'un autre bloc lamellaire (22, 22', 22'', 22"'), de sorte que les blocs lamellaires individuels (22, 22', 22'', 22"') soient agencés, vus depuis la section du dispositif de séparation de trois phases (10), sous la forme d'un losange et le second séparateur (20) comprenant un bloc lamellaire (32) qui, vu depuis la section du dispositif de séparation de trois phases (10), est agencé au milieu du losange formé par les quatre blocs lamellaires (22, 22', 22'', 22"') du premier séparateur (18), ou
ii) deux blocs lamellaires (22, 22', 22'', 22"') du premier séparateur étant respectivement adjacents l'un à l'autre avec une de leurs deux surfaces latérales à un angle d'inclinaison, par rapport à la direction longitudinale du bloc lamellaire (22, 22', 22'', 22"'), de 10° à 80°, et les deux paquets de blocs lamellaires formés à partir des deux blocs lamellaires (22, 22', 22'', 22"') ainsi adjacents l'un à l'autre étant reliés l'un à l'autre à chaque fois par une paroi (30) reliant les surfaces latérales des paquets de blocs lamellaires, de sorte que les quatre blocs lamellaires (22, 22', 22'', 22"') et les deux parois (30) soient agencés, vus depuis la section du dispositif de séparation de trois phases (10), sous la forme d'un hexagone, et le second séparateur (20) comprenant un bloc lamellaire (32), qui est agencé, vu depuis la section du dispositif de séparation de trois phases (10), au milieu de l'hexagone formé par les quatre blocs lamellaires (22, 22', 22'', 22"') et les deux parois (30) du premier séparateur (18).

2. Dispositif de séparation de trois phases (10) selon la revendication 1, **caractérisé en ce que** le premier séparateur (18) comprend quatre blocs lamellaires (22, 22', 22'', 22"'), qui sont constitués par 5 à 10 lamelles (24) parallèles les unes aux autres, entre lesquelles un canal d'écoulement (26) est formé à chaque fois.

3. Dispositif de séparation de trois phases (10) selon la revendication 1 ou 2, **caractérisé en ce que** le second séparateur (20) comprend un bloc lamellaire (32), qui est constitué par 10 à 20 lamelles (34) parallèles les unes aux autres, entre lesquelles un canal d'écoulement (26') est formé à chaque fois.

4. Dispositif de séparation de trois phases (10) selon au moins l'une quelconque des revendications 1 à 3, **caractérisé en ce que** les lamelles individuelles (24) des quatre blocs lamellaires (22, 22', 22'', 22"') du premier séparateur (18) et/ou du bloc lamellaire (32) du second séparateur (20) présentent, par rapport à l'horizontale, une inclinaison (α) comprise entre 20° et 100°.

5. Dispositif de séparation de trois phases (10) selon la revendication 4, **caractérisé en ce que** les lamelles individuelles des quatre blocs lamellaires (22, 22', 22'', 22"') du premier séparateur (18) présentent, par rapport à l'horizontale, une inclinaison (α) comprise entre 80° et 100°.

6. Dispositif de séparation de trois phases (10) selon la revendication 4 ou 5, **caractérisé en ce que** les lamelles individuelles du bloc lamellaire (32) du second séparateur (20) présentent, par rapport à l'horizontale, une inclinaison (α) comprise entre 20° et 80°.

7. Dispositif de séparation de trois phases (10) selon au moins l'une quelconque des revendications précédentes, **caractérisé en ce que** le premier séparateur (18) comprend quatre blocs lamellaires (22, 22', 22'', 22"'), qui comprennent chacun au moins trois lamelles (24) parallèles les unes aux autres, avec des canaux d'écoulement (26) formés à chaque fois entre elles, les lamelles (24) des blocs lamellaires individuels (22, 22', 22'', 22"') présentant, par rapport à l'horizontale, une inclinaison (α) comprise entre 20° et 100°.

8. Dispositif de séparation de trois phases (10) selon au moins l'une quelconque des revendications précédentes, **caractérisé en ce que** la ou les surfaces avant des quatre blocs lamellaires (22, 22', 22'', 22"') du premier séparateur (18) délimitent le dispositif de séparation de trois phases (10) vers l'extérieur.

9. Dispositif de séparation de trois phases (10) selon au moins l'une quelconque des revendications précédentes, **caractérisé en ce que** le premier séparateur (18) comprend au moins deux agglomérats de blocs lamellaires (42, 42', 42'', 42"'), parmi lesquels chaque agglomérat de blocs lamellaires (42, 42', 42'', 42"') comprend quatre blocs lamellaires (22, 22', 22'', 22"'), deux blocs lamellaires (22, 22', 22'', 22"') de chaque agglomérat de blocs lamellaires (42, 42', 42'', 42"') étant à chaque fois adjacents l'un à l'autre à un angle d'inclinaison, par rapport à la direction longitudinale du bloc lamellaire (22, 22', 22", 22"'), de 10° à 80°, et les deux paquets de blocs lamellaires formés à partir des deux blocs lamellaires (22, 22', 22", 22"') ainsi adjacents l'un à l'autre étant reliés l'un avec l'autre par à chaque fois une paroi (30) reliant les surfaces latérales des paquets de blocs lamellaires, de sorte que les quatre blocs lamellaires (22, 22', 22", 22"') et les deux parois (30) de chaque agglomérat de blocs lamellaires (42, 42', 42", 42"') soient agencés, vus depuis la section du dispositif de séparation de trois phases (10), sous la forme d'un hexagone, et le second séparateur étant agencé au centre de chaque hexagone.

10. Dispositif de séparation de trois phases (10) selon au moins l'une quelconque des revendications précédentes, **caractérisé en ce que** la zone d'entrée (12) pour le mélange triphasé est formée par les extrémités supérieures des lamelles individuelles (24) des quatre blocs lamellaires (22, 22", 22", 22"') du premier séparateur (18).

11. Dispositif de séparation de trois phases (10) selon au moins l'une quelconque des revendications précédentes, **caractérisé en ce qu'**une paroi intermédiaire (28) est prévue entre le bloc lamellaire (32) du second séparateur (20) et les quatre blocs lamellaires (22, 22', 22", 22"') du premier séparateur (18), qui, vue depuis la verticale, dépasse au-dessus de l'extrémité supérieure du premier séparateur (18).

12. Dispositif de séparation de trois phases (10) selon la revendication 11, **caractérisé en ce que** la paroi intermédiaire (28) correspond, vue depuis l'axe longitudinal du dispositif de séparation de trois phases (10), aux lamelles les plus intérieures des blocs lamellaires (22, 22', 22", 22"') du premier séparateur (18) adjacents au second séparateur (18), les lamelles les plus intérieures étant plus élevées que les autres lamelles (24) des mêmes blocs lamellaires (22, 22', 22", 22"').

13. Dispositif de séparation de trois phases (10) selon au moins l'une quelconque des revendications précédentes, **caractérisé en ce que** la sortie (16) pour le liquide est agencée au-dessus de l'extrémité supérieure du bloc lamellaire (32) du second séparateur (20).

14. Dispositif de séparation de trois phases (10) selon au moins l'une quelconque des revendications 7 à 13, **caractérisé en ce qu'**une paroi extérieure (36, 36') est prévue à chaque fois à l'extrémité inférieure, vue depuis l'axe longitudinal du dispositif de séparation de trois phases (10), des lamelles les plus extérieures de chacun des blocs lamellaires (22, 22', 22", 22"') du premier séparateur (18).

15. Dispositif de séparation de trois phases (10) selon la revendication 14, **caractérisé en ce qu'**au moins deux des parois extérieures (36, 36') sont pliées vers l'intérieur, vues depuis l'axe longitudinal du dispositif de séparation de trois phases (10), de sorte que les parois extérieures convergent vers le bas, par rapport à la verticale, en formant une gorge (38).

16. Dispositif de séparation de trois phases (10) selon la revendication 15, **caractérisé en ce que** les parois extérieures formant la gorge (38) convergent l'une vers l'autre à un angle (γ) de 30° à 120°.

17. Dispositif de séparation de trois phases (10) selon la revendication 15 ou 16, **caractérisé en ce qu'**une sortie (14) pour la fraction riche en solide est prévue au niveau de la gorge (38), la sortie (14) étant configurée sous la forme d'une fente parallèle à la gorge (38).

18. Dispositif de séparation de trois phases (10) selon la revendication 17, **caractérisé en ce qu'**une chicane (40, 40') est prévue sous la sortie (14), qui est configurée de sorte qu'aucun liquide, gaz ou solide s'écoulant à la verticale vers le haut depuis le dessous du dispositif de séparation de trois phases (10) ne puisse entrer dans la sortie (14).

19. Réacteur, qui comprend dans sa zone supérieure un dispositif de séparation de trois phases (10) selon au moins l'une quelconque des revendications précédentes.

20. Réacteur selon la revendication 19, **caractérisé en ce que** celui-ci est un réacteur anaérobie ou aérobie (44) pour la purification d'eau résiduaire ou d'eau de procédé, qui comprend au moins une conduite d'alimentation (46) pour l'introduction d'eau résiduaire ou d'eau de procédé à purifier dans le réacteur (44), ainsi qu'au moins une conduite de déchargement (16) pour le déchargement d'eau résiduaire ou d'eau de procédé purifiée du réacteur (44).

21. Procédé de séparation d'un gaz et d'un solide d'un mélange triphasé contenant un liquide, un gaz et un solide, comprenant les étapes suivantes :
a) l'introduction du mélange triphasé par une zone d'entrée (12) dans le premier séparateur (18) d'un dispositif de séparation de trois phases (10) d'un réacteur selon la revendication 20, le premier séparateur (18) formant la zone d'entrée (12) pour le mélange triphasé ou étant relié avec la zone d'entrée (12) pour le mélange triphasé,
b) la conduite du mélange triphasé, par rapport à la verticale, du haut vers le bas dans les canaux d'écoulement (26) du premier séparateur (18), afin de séparer le gaz du mélange triphasé avec formation d'un mélange biphasé,
c) le soutirage du mélange biphasé du premier séparateur (18),
d) l'introduction d'au moins une partie du mélange biphasé dans le second séparateur (20),
e) la conduite du mélange biphasé, par rapport à la verticale, du bas vers le haut dans les canaux d'écoulement (26') du second séparateur (20) afin de séparer le solide du mélange biphasé avec formation d'un liquide purifié et d'une fraction riche en solide,
f) le déchargement du liquide purifié du second séparateur (20), et
g) le déchargement de la fraction riche en solide par une sortie (14) du dispositif de séparation de trois phases (10),
seul le mélange biphasé déchargé du premier séparateur (18), et aucun mélange triphasé, étant introduit dans le second séparateur (20).
